Europäisches Patentamt

European Patent Office

Office européen des brevets

(19)

(11) Veröffentlichungsnummer: **0 277 288**
**B1**

(12) **EUROPÄISCHE PATENTSCHRIFT**

(45) Veröffentlichungstag der Patentschrift: 23.01.91

(21) Anmeldenummer: 87116378.8

(22) Anmeldetag: 06.11.87

(51) Int. Cl.$^5$: **A 01 C 15/04**

(54) Vorrichtung zum pneumatischen Streuen von Dünger.

(30) Priorität: 17.01.87 DE 3701290

(43) Veröffentlichungstag der Anmeldung:
10.08.88 Patentblatt 88/32

(45) Bekanntmachung des Hinweises auf die
Patenterteilung:
23.01.91 Patentblatt 91/04

(84) Benannte Vertragsstaaten:
AT BE DE FR GB NL SE

(56) Entgegenhaltungen:
DE-A-3 335 805
DE-B-2 256 939
FR-A-2 436 726
GB-A-2 095 523

(73) Patentinhaber: Rauch Landmaschinenfabrik
GmbH
Postfach 1107 Landstrasse 14
D-7573 Sinzheim (DE)

(72) Erfinder: Rauch, Norbert, Dipl.-Ing.
Bergseestrasse 49
D-7573 Sinzheim (DE)

(74) Vertreter: Dr.-Ing. Hans Lichti Dipl.-Ing. Heiner
Lichti Dipl.-Phys. Dr. Jost Lempert
Postfach 41 07 60 Durlacher Strasse 31
D-7500 Karlsruhe 41 (DE)

Courier Press, Leamington Spa, England.

**Beschreibung**

Die Erfindung betrifft eine Vorrichtung zum pneumatischen Streuen von Dünger oder dergleichen, bestehend aus einem aufgesattelten oder fahrbaren Vorratsbehälter mit Auslauföffnungen, diesen zugeordneten Dosierorganen und daran anschließenden, sich quer zur Fahrtrichtung erstreckenden Streurohren, die in unterschiedlichem Abstand von der Behälterachse das Streugut umlenkende Krümmer aufweisen, vor deren Abgabeende gegenüber der Krümmerebene geneigte Prallplatten angeordnet sind, die den auftreffenden Düngerstrahl zu einem Streufächer reflektieren.

Vorrichtungen dieser Art sind als Gebläsestreuer vornehmlich in der Landwirtschaft zum Verteilen körniger Düngemittel, Unkrautvertilgungsmittel oder dergleichen im Einsatz, um mit Hilfe der weit ausladenden Streurohre breite Flächenstreifen gleichmäßig bestreuen zu können. Dabei kommt es darauf an, einerseits nur die pro Flächeneinheit unbedingt notwendige Streumenge auszutragen, andererseits das Streugut über die gesamte Streubreite absolut gleichmäßig zu verteilen. Hierfür sorgen zunächst die den Auslauföffnungen des Vorratsbehälters zugeordneten Dosierorgane, die jedem Streurohr eine bestimmte und für alle Streurohre gleiche Menge zuführen. Diese Dosierung wird heute mit einem sehr hohen Genauigkeitsgrad beherrscht. Damit ist also sichergestellt, daß an jedem Rohrkrümmer die gleiche Menge an Dünger austritt. Bei der anschließenden Verteilung des Düngers durch Reflexion an den Prallplatten wird nun aber diese hohe Dosiergenauigkeit teilweise wieder zunichte gemacht. Es hat sich nämlich gezeigt, daß sowohl die Breite des einzelnen Streufächers als auch dessen Ausrichtung mit Bezug auf die Krümmerachse und schließlich auch die Kornverteilung innerhalb des Streufächers sich in Abhängigkeit von der Austrittsgeschwindigkeit, der Düngermenge und der Düngerform ändern. Ferner wird die Qualität des Streuergebnisses von der Position der Prallplatte bzw. des Krümmers beeinflußt derart, daß die Verteilung und deren Gleichmäßigkeit umso schlechter ist, je näher sich der Krümmer an der Aufgabestelle befindet, d.h. die Qualität des Streubildes nimmt von innen nach außen zu. Auch die Lage der Streuvorrichtung hat hierbei einen negativen Einfluß, insbesondere wird das Streuergebnis schlechter, wenn beispielsweise auf hängigem Gelände gestreut wird. Dies führt dazu, daß eine absolut gleichmäßige Verteilung des Düngers bei der Mehrzahl der Betriebsbedingungen und Düngerarten nicht gegeben ist.

Für die Ausbildung ungleich breiter Streufächer und unsymmetrischer Massenverteilung innerhalb des Streufächers sind mehrere Einflußfaktoren verantwortlich. Während in den quer zur Fahrtrichtung verlaufenden Streurohren im allgemeinen eine gleichmäßige Gutbeladung des Förderstroms über den Querschnitt anzunehmen ist, wird diese gleichmäßige Massenverteilung im Bereich des Rohrkrümmers aufgehoben. Zunächst tritt im Rohrkrümmer aufgrund der Zentrifugalkräfte ein Abscheideeffekt ein, indem sich der Düngerstrom an der außen liegenden Wandung des Rohrkrümmers verdichtet, während an der innen liegenden Wandung des Krümmers eine Partikelverdünnung eintritt. Der an der Öffnung des Rohrkrümmers austretende Düngerstrahl weist also eine über den Querschnitt ungleichmäßige Partikeldichte auf. Dabei kann je nach Düngermenge die Partikeldichte auch in der Querschnittshöhe variieren. Diese Effekte hat man dadurch zu beheben versucht, daß man entweder für jedes Streurohr zwei Krümmer vorgesehen hat, die mit Abstand voneinander an je einer Pprallplatte enden (DE-GM 84 27 678), womit statistisch das Ergebnis zwar möglicherweise etwas verbessert wird, an jedem Streufächer aber die gleichen Unregelmäßigkeiten verbleiben, oder man hat den endständigen Rohrkrümmer in mehrere Krümmer kleineren Querschnitts und unterschiedlicher Krümmung aufgegliedert (DE-OS 27 18 841, 27 55 353, DE-PS 30 47 245, 35 01 264). Damit ist zwar bereits eine Vergleichmäßigung des Streuergebnisses festzustellen, dennoch läßt sich weder eine Spiegelsymmetrie des Streufächers zur Krümmerachse, noch eine symmetrische Massenverteilung innerhalb des Streufächers erreichen.

Andere Überlegungen basieren auf der Erkenntnis, daß zumindest ein großer Teil der Düngerpartikel beim Eintritt in den Rohrkrümmer an der außen liegenden Wandung entgegen ihrem Auftreffwinkel reflektiert werden und — bei den üblicherweise innenseitig offenen Krümmern — entweder gar nicht oder am äußeren Rand auf die Prallplatte gelangen, so daß der Dünger nicht in Form eines gebündelten Strahls auf die Prallplatte trifft. Ggfls. kann das einzelne Partikel auch mehrfach reflektiert werden, was insbesondere bei rundumgeschlossenen Rohrkrümmern der Fall ist, so daß der Düngerstrahl am Krümmerende zerreißt und die Partikel an sehr unterschiedlichen Stellen auf die Prallplatte treffen. Je nach Fördergeschwindigkeit bzw. Düngermenge stellen sich bevorzugte Abgangsrichtungen ein, die zu einem unregelmäßigen Streubild führen. Diese Erkenntnis hat dazu geführt, den Querschnitt des Rohrkrümmers vom Streurohr bis zur Abgabeöffnung zu verengen, um die Möglichkeit von Reflexionen zu vermindern und den Düngerstrahl zu bündeln (DE-AS 24 52 793). Dennoch variiert auch bei dieser Ausführung das Streubild in Abhängigkeit von der Düngermenge und der Kornform des Düngers.

Es ist weiterhin bekannt (FR-A-2 436 726), bei Verteilmaschinen an einer zentralen Förderleitung an deren Innenseiten Unebenheiten vorzusehen, um den Dünger über den gesamten Querschnitt zu verteilen und dann auf verschiedene Verteilerrohre, Düsen od. dgl. aufzuteilen. Dabei kann sich aber in den Verteilerrohren wieder eine Entmischung oder auch eine Separierung der Partikel einstellen, so daß beim anschließenden Aufprallen auf einen Prallteller wiederum die vorgenannten Effekte eintreten.

Schließlich ist es bekannt (DE-PS 33 35 805), das Streuergebnis durch Maßnahmen unmittelbar an der Prallplatte zu beeinflussen, indem die Prallplatte in der Horizontalen in zwei Flächenabschnitte aufgeteilt ist, die einen unterschiedlichen Außenwinkel mit dem Krümmer bilden. Hiermit wird insbesondere eine mengenunabhängige Vergleichmäßiggung des Streuergebnisses erreicht. Ferner ist es bekannt (DE-PS 36 15 076), die Prallplatte nicht eben auszubilden, sondern mit einer Vielzahl warzenartiger Vorsprünge zu versehen. Hierdurch wird vor allem der Effekt bevorzugter Auftreffrichtungen, die zu entsprechend bevorzugten Reflexionsrichtungen führen, eliminiert, indem die Partikel an den warzenartigen Erhöhungen in statistisch beliebigen Richtungen reflektiert werden.

Ein gleichmäßiges Streubild an jeder Prallplatte setzt voraus, daß sich einerseits der Streufächer in absolut spiegelsymmetrischer Form bezogen auf die nach hinten verlängerte Krümmerachse ausbildet, andererseits die Massenverteilung zu beiden Seiten dieser Achse gleichfalls absolut spiegelsymmetrisch ist. Diese Voraussetzung wird von keiner der zuvor geschilderten Maßnahmen am Krümmer oder an der Prallplatte, auch nicht bei Kombinationen solcher Maßnahmen erreicht.

Hieraus leitet sich die Aufgabe der Erfindung ab, die Vorrichtung des eingangs genannten Aufbaus so auszubilden, daß — bezogen auf die nach hinten verlängerte Krümmerachse — der Streufächer in seiner geometrischen Form absolut spiegelsymmetrisch ausgebildet und zugleich eine spiegelsymmetrische Massenverteilung erreicht wird.

Gemäß der Erfindung wird diese Aufgabe dadurch gelöst, daß jeder Krümmer ein geschlossenes Rechteckprofil aufweist und an den Innenseiten der den Dünger leitenden, außen liegenden Wand und der gegenüber innen liegenden Wand mit die Düngerpartikel von der Wand ablenkenden und diese reflektierenden Unebenheiten versehen ist, und daß die Krümmerkurve zumindest der außen liegenden Wand des Krümmers im Auslaufbereich desselben eine ausgeprägte Diskontinuität aufweist.

Wie bereits angedeutet legt sich ein großer Teil des Düngerstrahls aufgrund der Umlenkung im Krümmer an der Außenwand an, so daß im Gegensatz zu der in den Streurohren über dem Querschnitt gleichmäßigen Gutbeladung diese im Krümmer unsymmetrisch ist. Diese Teilorientierung des Düngerstrahls ließe sich in einfacher Weise dadurch aufheben, daß an den Krümmer wieder ein längeres gerades Endstück anschließt, in welchem sich der Dünger über den Querschnitt wieder gleichmäßig verteilt. Ein solches längeres gerades Endstück würde jedoch zu einer unerwünschten Vergrößerung der Baulänge und des Gewichtes führen und würde zudem das für den Fahrbetrieb auf Straßen notwendige Einklappen der Streuausleger erschweren. Die Erfindung erreicht eine Vergleichmäßigung der Gutbeladung über den Querschnitt des Krümmers zumindest im Bereich der Austrittsöffnung dadurch, daß die Düngerpartikel zunächst an der Innenseite der äußeren Wand des Krümmers aufgrund der dort angeordneten Unebenheiten und dann an der gegenüberliegenden Wand innerhalb des Krümmers wahllos reflektiert werden, so daß sich keine Vorzugsrichtungen ausbilden können und die Düngerpartikel an der Öffnung des Krümmers in statistisch gleichmäßiger Verteilung austreten. Es wird somit durch die Unebenheiten eine ideale Unordnung im Düngerstrahl erzeugt, die nach Reflexion an der Prallplatte zu einem geometrisch und gravimetrisch spiegelsymmetrischen Streufächer führt. Die Unebenheiten können in regelmäßiger oder unregelmäßiger Verteilung angeordnet sein. Der vorgenannte Effekt tritt bei jeder Art von Krümmer ein unabhängig davon, ob er nach hinten oder vorn, nach unten oder oben oder ob er winklig angestellt ist. Durch die die Krümmungskurve unterbrechende Diskontinuität werden die sich bevorzugt an der Außenwand anlegenden Düngerpartikel in Richtung auf die Innenwand umgelenkt und zu vielfacher Reflexion im Bereich des Austrittsendes des Krümmers gezwungen, wobei die Unebenheiten für die erwünschte Unordnung bei der Partikelreflexion führen.

Es ist bei Sämaschinen eine Verteileinrichtung bekannt (DE-OS 33 00 444), die einen ankommenden Saatgutstrahl in einem sich in Strömungsrichtung stark verbreiternden und in der Bahnhöhe abnehmenden Krümmer auf mehrere Schlauchleitungen verteilt. Die außen und innen liegenden Leitwände des Krümmers sind auch hier mit Unebenheiten besetzt. Sie haben jedoch nur die Aufgabe den Saatgutstrahl zu verbreitern, nicht aber den Strahl aufzulösen und die Partikel zu vielfachen, ungeordneten Reflexionen zu veranlassen. Dies ist schon aufgrund der wesentlich geringeren Transportgeschwindigkeit des Saatgutes gegenüber Düngern nicht möglich und wäre wegen des zu starken Verschleisses am Korn auch höchst unerwünscht.

Bei pneumatischen Drillmaschinen und Düngerstreuern ist es schließlich bekannt (DD-PS 123 774), das über eine zentrale Leitung angeförderte körnige Gut auf mehrere Einzelleitungen zu verteilen, indem ein breites und flaches Diffusor-Zwischenstück eingesetzt wird, das abwechselnd an der oberen und der unteren Wand klappenartige Leitflächen aufweist. Auch hiermit soll lediglich eine breite Auffächerung des zentralen Gutstroms auf die nebeneinanderliegenden einzelnen Abgangsleitungen erreicht werden, wobei durch die wechselweise Anordnung der Leitklappen eine Konzentrierung der Partikel zu einem breiten flachen Strahl erfolgt, nicht aber, wie bei der erfindungsgemäßen Ausbildung, eine ideale Unordnung durch Mehrfachreflexionen erzeugt wird.

Ein gleichmäßiges Streubild läßt sich bei insbesondere großer Düngermenge und großer Transportgeschwindigkeit dann herstellen, wenn die Diskontinuität der Krümmungskurve gemäß einer Ausführungsform dadurch gebildet ist, daß an der Innenseite der außen liegenden Wand des Krümmers im Bereich dessen Endes eine in Richtung auf die gegenüberliegende innere Wand geneigte Leitfläche angeordnet ist.

Mit Vorteil geht der Krümmer in ein gerades Endstück mit geschlossenem Rechteckprofil über, das an seinem offenen Ende die Prallplatte aufweist.

Ein solches Rechteckprofil hat den Vorteil eines relativ geringen Energieverlustes in der Transportströmung, so daß die den Partikeln aufgrund ihrer vielfachen Reflexion entzogene Energie zu keiner, bzw. einer nur unwesentlichen Verringerung der Austrittsgeschwindigkeit der Partikel führt. Bei erfindungsgemäß erzeugten Partikelableitungen und -reflexionen kann das gerade Endstück relativ kurz sein.

In weiterer Ausgestaltung der Erfindung ist vorgesehen, daß die Leitfläche an der außen liegenden Wand des Krümmers im Bereich des Übergangs in das gerade, gegenüber dem Krümmer verengte Endstück angeordnet ist.

Die an der Außenwand anliegenden Düngerpartikel werden also erst gegen Ende ihrer Umlenkbewegung im Krümmer nach innen abgeleitet, um dann nach mehrfacher Reflexion innerhalb des geraden Endstücks auf die Prallplatte zu treffen.

Vorzugsweise sind die Unebenheiten an der Innenseite der außen liegenden Wand vor und auf der Leitfläche angeordnet, so daß die Partikel vor Eintritt in das gerade Endstück unter vielen Winkeln reflektiert und abgelenkt werden.

Gemäß einem weiteren Merkmal der Erfindung ist das gerade Endstück an der Innenseite der außen und der innen liegenden Wand mit Unebenheiten gegebenenfalls in regelmäßiger Anordnung versehen.

Durch dieses erfindungsgemäße Merkmal ist gewährleistet, daß sich auch innerhalb des geraden Endstücks keine bevorzugten Strömungsrichtungen und damit Abgangsrichtungen an der Austrittsöffnung ausbilden können, vielmehr die am Übergang vom Krümmer in das gerade Endstück erzeugten Reflexionen sich in dem geraden Endstück fortsetzen und an dessen Austrittsende zu einer idealen Unordnung führen.

In vorteilhafter Weiterbildung ist zumindest das gerade Endstück an der Innenseite sämtlicher Wände mit Unebenheiten in gegebenenfalls regelmäßiger Anordnung versehen.

Die vorgenannte Ausführung trägt der Tatsache Rechnung, daß beim Streuen in hängigem Gelände oder bei größeren Bodenunebenheiten die Krümmer unter Umständen nicht horizontal zur Streufläche liegen, sondern nach oben oder unten geneigt sind. Dies wiederum kann dazu führen, daß der Düngerstrahl sich innerhalb des Krümmers bevorzugt oben oder unten anlegt. Die erfindungsgemäß zumindest am geraden Endstück am besten an sämtlichen Innenseiten vorgesehenen Unebenheiten führen auch in diesem Fall zu einer Mehrfachreflexion der Partikel in dem Endstück und damit zur gleichmäßigen Verteilung des Düngers über den Austrittsquerschnitt.

Aufgrund der vorgenannten Gegebenheiten bei der Streuarbeit kann es sich ferner empfehlen, Leitflächen, wie sie an der Innenseite der außen liegenden Wandung vorgesehen sind, auch an der oberen und/oder unteren Wandung anzuordnen, um die Partikel auf die jeweils gegenüberliegende Wandung abzuleiten.

In weiterer vorteilhafter Ausgestaltung sind die am Krümmer vor der Leitfläche angeordneten Unebenheiten größer als die am geraden Endstück.

Die praktische Verwirklichung der Unebenheiten im Krümmer und im geraden Endstück ist auf vielfache Art und Weise möglich. Beispielsweise können die Wandungen, die solche Unebenheiten aufweisen, wellenförmig ausgebildet sein oder der gesamte Krümmer und/oder das gerade Endstück als Wellrohr gestaltet sein. Dabei kann die am Übergang des Krümmers in das gerade Endstück vorhandene letzte Welle als Leitfläche wirksam werden.

Gemäß einer bevorzugten Ausführung sind die Unebenheiten von warzenartigen Erhöhungen gebildet. Durch diese warzenartigen Erhöhungen findet eine räumliche Reflexion in allen Richtungen statt. Ferner lassen sich der Krümmer und das gerade Endstück in einfacher Weise aus Warzenblechen herstellen.

In weiterer Ausgestaltung dieser Ausführungsform können die warzenartigen Erhöhungen in Strömungsrichtung lang gezogen, z.B. in Strömungsrichtung sich tropfenförmig erweiternd ausgebildet sein. Hierdurch werden die Partikel bei gleichwohl räumlicher Streuung bevorzugt in Richtung auf die Austrittsöffnung reflektiert und nicht quer zum Düngerstrahl, so daß sich auf diese Weise die Energieverluste minimieren lassen.

Es ist an sich bekannt (DE-PS 35 01 264, DE-AS 22 56 939), den Düngerstrahl innerhalb des Krümmers durch senkrecht stehende Leitbleche, die parallel zu den Außenwänden verlaufen in zwei oder mehr Düngerstrahlen aufzuteilen. Gemäß der Erfindung ist das Leitblech zumindest im Bereich des Krümmerauslaufs und zumindest an seiner innen liegenden Seite mit Unebenheiten in gegebenenfalls regelmäßiger Anordnung versehen. Hierdurch ist gewährleistet, daß auch die Partikel des innen liegenden Düngerstrahls im Bereich des Übergangs vom Krümmer zum geraden Endstück vom Leitblech wegreflektiert werden. Gegenüber dem Stand der Technik zeigt das Leitblech eine weitere vorteilhafte Wirkung, indem der ankommende Düngerstrahl die Reflexion der Partikel an der außen liegenden Wand nicht durch die Luftgeschwindigkeit und durch Partikelkollisionen wieder aufheben kann.

Dabei kann das Leitblech mit den Unebenheiten bis in das gerade Endstück hineinragen. In diesem Fall ist es zweckmäßig, Unebenheiten auch an der Außenseite des Leitblechs vorzusehen, um die von der Außenwand und der dort angeordneten Leitfläche auf die Außenseite des Leitblechs treffenden Partikel räumlich unter beliebigen Winkeln zu reflektieren.

In weiterer Ausgestaltung der Erfindung ist vorgesehen, daß die Krümmungskurve des Leitblechs im Auslaufbereich des Krümmers eine ausgeprägte Diskontinuität aufweist, die gegebenenfalls der an der außen liegenden Wand des Krümmers entspricht. Durch diese Maßnahme wird auch der durch das Leitblech innen geführte Teilstrahl am Auslauf des Krümmers nach innen abgelenkt bzw. aufgerissen.

Gemäß einem weiteren Ausführungsbeispiel ist vorgesehen, daß der Krümmer von seinem Ansatz an der Streuleitung zunächst in Fahrtrichtung nach vorne gezogen und dann nach hinten abgebogen ist.

Mit diesem Ausführungsbeispiel kann das gerade Endstück, in welchem die Homogenisierung der Gutbeladung erfolgt, relativ lang ausgebildet sein, ohne beim Einklappen der Streuausleger hinderlich zu sein.

Die grundsätzliche Wirkung der erfindungsgemäßen Maßnahme besteht darin, daß die durch den Krümmer erzeugte Orientierung der Partikel auf kürzester Strecke aufgelöst und an deren Stelle wieder eine homogenisierte Gutbeladung im Bereich des Austritts festzustellen ist. Zudem wird der austretende Düngerstrahl räumlich wie ein Sprühstrahl aufgerissen und dadurch schon eine Verteilung in die Breite vor der Prallplatte erreicht.

Schließlich läßt sich die erfindungsgemäße Ausgestaltung des Krümmers in vorteilhafter Weise mit der erwähnten bekannten Prallplatte kombinieren, die mit Unebenheiten in regelmäßiger Anordnung, z.B. mit warzenartigen Erhöhungen, versehen ist.

Nachstehend ist die Erfindung anhand einiger in der Zeichnung dargestellter Ausführungsbeispiele beschrieben. In der Zeichnung zeigen:

Figur 1 Eine schematische Ansicht auf die Frontseite eines Ausführungsbeispiels einer Streuvorrichtung;

Figur 2 eine abgebrochene Draufsicht auf die rechte Hälfte der Vorrichtung gemäß Fig. 1 ohne Vorratsbehälter;

Figur 3 eine geschnittene Draufsicht auf eine erste Ausführungsform des Krümmers;

Figur 4 eine der Fig. 3 ähnliche Ansicht einer weiteren Ausführungsform eines Krümmers;

Figur 5 eine Ansicht auf die Austrittsöffnung des Krümmers gemäß Fig. 3 und 4 ohne Prallplatte;

Figur 6 eine wiederum ähnliche Draufsicht auf eine dritte Ausführungsform des Krümmers;

Figur 7 eine ähnliche Draufsicht auf eine vierte Ausführungsform des Krümmers;

Figur 8 eine Seitenansicht eines Krümmers in Richtung der Achse eines Streurohrs.

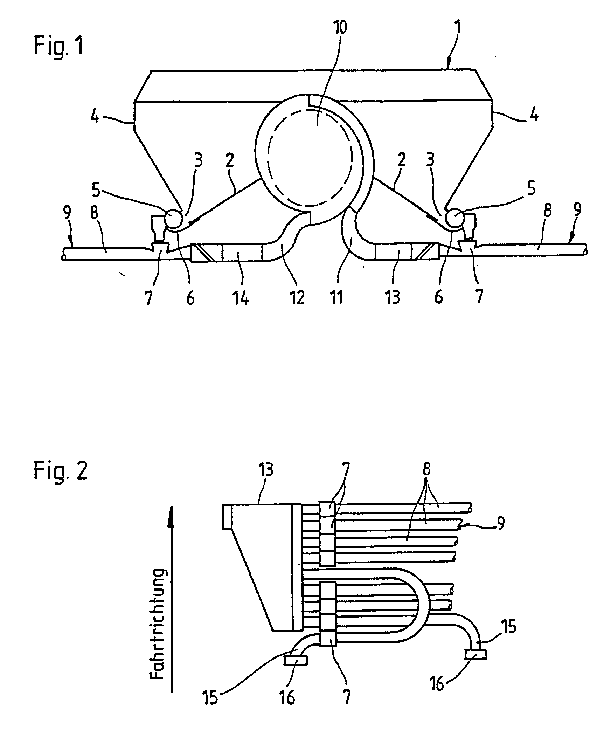

Die Streuvorrichtung gemäß Fig. 1 und 2 ist beispielsweise an dem nicht gezeigten Dreipunktgestänge eines Schleppers angebracht. Sie weist einen breit ausladenden Vorratsbehälter 1 auf, dessen Bodenfläche 2 und Seitenwände 4 zueinander und zu schlitzartigen Auslauföffnungen 3 konvergieren. Unmittelbar vor den Auslauföffnungen sind Dosierorgane 5, z.B. in Form von Nockenrädern, angeordnet, denen der Dünger über Leitflächen 6 zuläuft. Unterhalb der Dosierorgane sind Auffangschalen 7 angeordnet, die je einem Streurohr 8 eines Auslegers 9 zugeordnet sind. Je ein solcher Ausleger 9 mit einer Mehrzahl von Streurohren 8 erstreckt sich quer zur Fahrtrichtung zu beiden Seiten des Vorratsbehälters (Fig. 2).

An der Frontseite des Vorratsbehälters ist ein Gebläse 10 angeordnet, dessen druckseitige Abgänge 11, 12 an je einen Luftverteiler 13, 14 angeschlossen sind. Von dort wird die Druckluft auf die einzelnen Streurohre 8 aufgeteilt. Sie durchströmt unmittelbar unterhalb der Auffangschalen 7 einen Injektor, in den das Streugut mittels der Dosierorgane 5 zugeführt und auf Transportgeschwindigkeit beschleunigt wird.

Die Streurohre enden in unterschiedlichem Abstand von der Längsachse in Krümmern 15, die nach hinten oder unten, aber auch nach vorne oder oben und schließlich auch unter winkliger Anordnung von z.B. 45° weisen können. Vor der Abgabeöffnung jedes Krümmers 15 ist eine Prallplatte 16 angeordnet, die nach hinten und unten winklig angestellt ist. Die Prallplatten breiten den auf sie auftreffenden Düngerstrahl zu einem Streufächer auf.

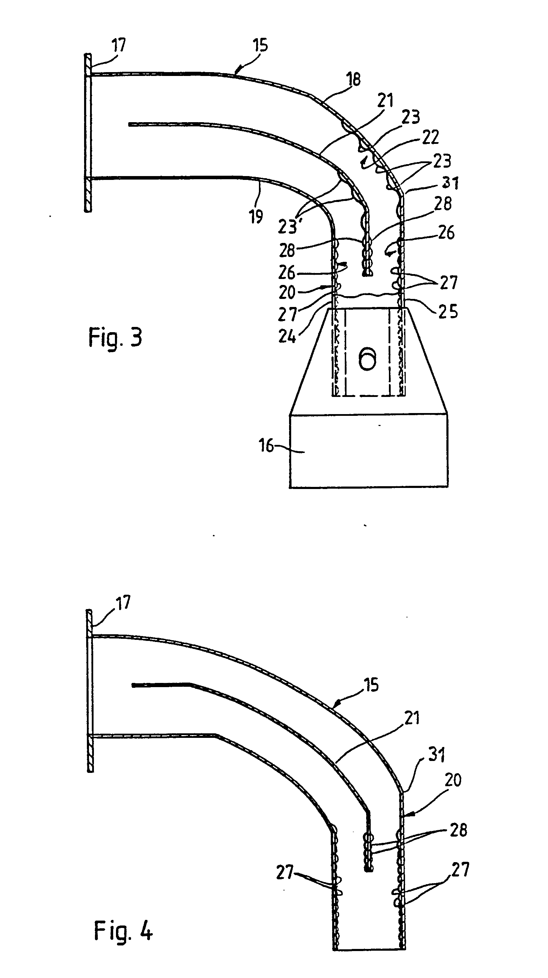

Die Krümmer 15 sind aus einer Art Rechteckrohr mit größerer Höhe als Breite ausgebildet. Wie Fig. 3 erkennen läßt, verengt sich der Krümmer 15 von seinem Anschlußflansch 17, mit dem er an einem Streurohr 8 befestigt ist, in Richtung der Düngerströmung. Zu diesem Zweck weisen die außenliegende Wand 18 und die innenliegende Wand 19 eine Krümmung mit mehreren Krümmungsmittelpunkten auf. An den Krümmer 15 schließt sich bei dem gezeigten Ausführungsbeispiel ein gerades Rohrstück 20 an, vor dessen Austrittsöffnung schließlich die Prallplatte 16 befestigt ist. Ferner ist bei dieser Ausführungsform innerhalb des Krümmers 15 und etwa parallel zu dessen Wänden 18, 19 ein Leitblech 21 senkrecht eingesetzt, das den in den Krümmer 15 einströmenden Dünger in zwei Teilströme zerlegt. Da die Gutbeladung im Streurohr und bei Eintritt in den Krümmer 15 über den Querschnitt gleichmäßig ist, werden durch das Leitblech 21 zwei Teilmengenströme erzeugt.

Vor dem Übergang des Krümmers 15 in das gerade Rohrstück 20 sind an der Innenseite der außenliegenden Wandung 18 des Krümmers Unebenheiten 22 über die Wand verteilt. Bei dem gezeigten Ausführungsbeispiel sind die Unebenheiten 22 als warzenartige Erhöhungen ausgebildet. Ebenso weist das Leitblech 21 an seiner Innenseite warzenartige Erhöhungen 24 auf. Ferner weist die Krümmungskurve der außenliegenden Wand eine Diskontinuität 31 in Form eines Knicks auf, an den das gerade Rohrstück anschließt.

Bei der Ausführungsform gemäß Fig. 3 ist auch das gerade Rohrstück 20 an seinen gegenüberliegenden Seitenwänden 24, 25 mit Unebenheiten 26 wiederum in Form warzenartiger Erhöhungen 27 versehen. Diese erstrecken sich über die gesamte Länge des geraden Rohrstücks. Das Leitblech 21 ragt noch über eine gewisse Länge in das gerade Rohrstück 20 hinein und weist dort auf beiden Seiten warzenartige Vorsprünge 28 auf.

Wie aus der Zeichnung ersichtlich, sind die warzenartigen Vorsprünge 23 und 24 an der außenliegenden Wandung 18 bzw. am Leitblech 21 größer ausgebildet als die warzenartige Vorsprünge 27 und 28 am geraden Rohrstück 20 bzw. an dem dort hineinreichenden Teil des Leitblechs 21.

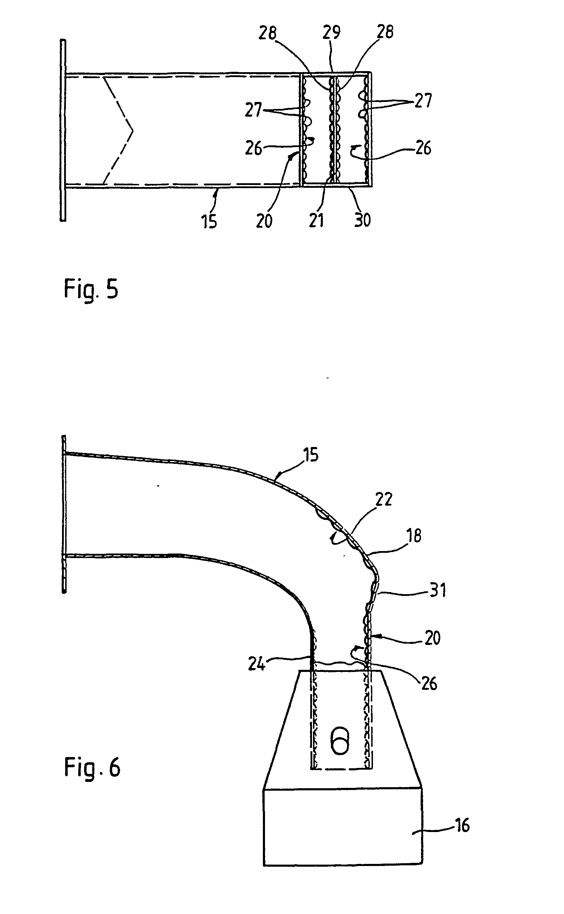

Bei dem Ausführungsbeispiel gemäß Fig. 4 ist an den Krümmer 15 wiederum ein gerades Rohrstück 20 angesetzt und ferner in den Krümmer 15 ein senkrechtes Leitblech 21 eingesetzt, das bis in das gerade Rohrstück 20 hineinreicht. Das gerade Rohrstück ist zumindest an seinen gegenüber liegenden Seitenwänden innenseitig mit warzenartigen Vorsprüngen 27 versehen, wie auch das in das gerade Rohrstück hineinragende Teil des Leitblechs 21 warzenartige Erhöhungen 28 trägt. Aus Fig. 5 ist ersichtlich, daß die warzenartigen Vorsprünge 27 und 28 sich über die gesamte Höhe des rechteckförmigen Querschnitts des geraden Rohrstücks 20, wie auch des Krümmers erstrecken, so daß sich insgesamt eine der Unebenheiten ergibt. Gegebenenfalls kann zumindest das gerade Rohrstück 20 auch an der Innenseite seiner oberen Wand 29 und seiner unteren Wand 30 mit ähnlichen Unebenheiten versehen sein.

Bei dem Ausführungsbeispiel gemäß Fig. 6 ist zusätzlich zu den Unebenheiten 22 im Endbereich des Krümmers 15 dessen außenliegende Wand 18 unmittelbar am Übergang in das gerade Rohrstück 20 mit einer Diskontinuität 31 in Form einer Leitfläche versehen, die in Richtung auf die gegenüberliegende innere Wand 24 des geraden Rohrstücks 20 geneigt ist. Die Unebenheiten 22 erstrecken sich auch über die Innenseite der Leitfläche 31. Die Leitfläche 31 stellt in Verbindung mit den Unebenheiten 22 sicher, daß sich die Düngerpartikel nicht an der Außenwand anlegen bzw. dort nicht verbleiben, sondern mehrfach räumlich in das gerade Rohrstück 20 reflektiert werden.

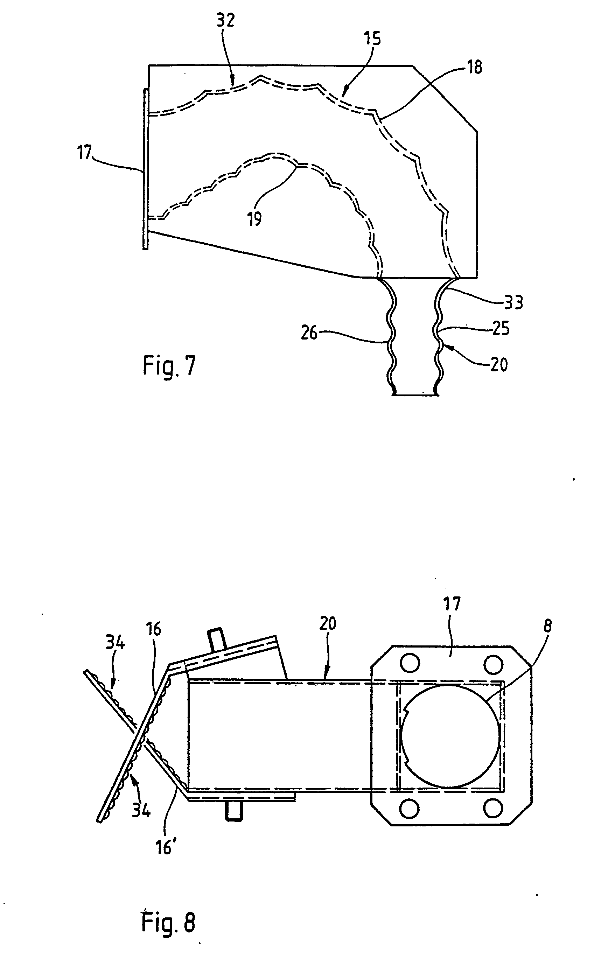

Bei dem Ausführungsbeispiel gemäß Fig. 7 sind zumindest die innen- und außenliegenden Seitenwände 18 und 19 des Krümmers wellenförmig ausgebildet, so daß sich an der Innenseite wiederum Unebenheiten bilden. Auch das an den Krümmer 15 ansetzende gerade Rohrstück 20 ist bei diesem Ausführungsbeispiel mit wellenförmigen Seitenwänden 25 und 26 versehen. Um das als Homogenisierungsstrecke wirkende gerade Rohrstück 20 möglichst lang ausbilden zu können, ist der Krümmer 15 in seinem an den Flansch 17 ansetzenden ersten Abschnitt 32 nach vorne gezogen und dann erst nach hinten gebogen.

Bei diesem Ausführungsbeispiel bildet die erste Welle 33 am geraden Rohrstück 20 oder auch die letzte Welle der Außenwand des Rohrkrümmers 18 eine Leitfläche ähnlich der in Fig. 6 gezeigten Leitfläche 31, die die an der Außenwand anliegenden Düngerpartikel nach innen ablenkt.

Figur 8 zeigt eine bevorzugte Ausführungsform der Prallplatte 16, die an ihrer Innenseite gleichfalls mit Unebenheiten 34, z.B. mit warzenartigen Erhöhungen, versehen ist. Ferner ist aus Figur 8 ersichtlich, daß die nach hinten und unten geneigte Prallplatte 16 für die Normaldüngung durch Umsetzen an die Unterseite des geraden Rohrstücks 20 in der Stellung 16′ für die Spätdüngung umgerüstet werden kann.

## Patentansprüche

1. Vorrichtung zum pneumatischen Streuen von Dünger oder dergleichen, bestehend aus einem aufgesattelten oder fahrbaren Vorratsbehälter mit Auslauföffnungen, diesen zugeordneten Dosierorganen und daran anschließenden, sich quer zur Fahrtrichtung erstreckenden Streurohren, die in unterschiedlichem Abstand von der Behälterachse das Streugut umlenkende Krümmer aufweisen, vor deren Abgabeende gegenüber der Krümmerebene geneigte Prallplatten angeordnet sind, die den auftreffenden Düngerstrahl zu einem Streufächer reflektieren, dadurch gekennzeichnet, daß jeder Krümmer (15) ein geschlossenes Rechteckprofil aufweist und an den Innenseiten der den Dünger leitenden, außen liegenden Wand (18) und der gegenüber innen liegenden Wand mit die Düngerpartikel von der Wand ablenkenden und diese reflektierenden Unebenheiten (22) versehen ist, und daß die Krümmungskurve zumindest der außen liegenden Wand (18) des Krümmers (15) im Auslaufbereich desselben eine ausgeprägte Diskontinuität (31) aufweist.

2. Vorrichtung nach Anspruch 1, dadurch gekennzeichnet, daß die Unebenheiten in regelmäßiger Verteilung angeordnet sind.

3. Vorrichtung nach Anspruch 1, dadurch gekennzeichnet, daß zumindest an der Innenseite der außen liegenden Wand (18) des Krümmers (15) im Bereich dessen Endes eine in Richtung auf die gegenüberliegende innere Wand (19) geneigte, die Diskontinuität bildende Leitfläche (31) angeordnet ist.

4. Vorrichtung nach einem der Ansprüche 1 bis 3, dadurch gekennzeichnet, daß der Krümmer (15) ein gerades Endstück (20) mit geschlossenem Rechteckprofil aufweist, das an seinem offenen Ende die Prallplatte (16) aufweist.

5. Vorrichtung nach einem der Ansprüche 1 bis 4, dadurch gekennzeichnet, daß die Leitfläche (31) an der außen liegenden Wand (18) des Krümmers (15) im Bereich des Übergangs in das gerade, gegenüber dem Krümmer verengte Endstück (20) angeordnet ist.

6. Vorrichtung nach einem der Ansprüche 1 bis 5, dadurch gekennzeichnet, daß die Unebenheiten (22) an der Innenseite der außen liegenden Wand (18) vor und auf der Leitfläche (31) angeordnet sind.

7. Vorrichtung nach einem der Ansprüche 1 bis 6, dadurch gekennzeichnet, daß das gerade Endstück (20) an der Innenseite der außen und der innen liegenden Wand (24, 25) mit Unebenheiten (26) versehen ist.

8. Vorrichtung nach einem der Ansprüche 1 bis 7, dadurch gekennzeichnet, daß zumindest das gerade Endstück (20) an der Innenseite sämtlicher Wände (24, 25, 29, 30) mit Unebenheiten (26) in ggfls. regelmäßiger Anordnung versehen ist.

9. Vorrichtung nach einem der Ansprüche 1 bis 8, dadurch gekennzeichnet, daß die am Krümmer (15) vor der Leitfläche (31) angeordneten Unebenheiten (22) größer sind als die (26) am geraden Endstück (20).

10. Vorrichtung nach einem der Ansprüche 1 bis 9, dadurch gekennzeichnet, daß die Unebenheiten (22, 26) durch Ausbildung des Krümmers (18) und/oder des geraden Endstücks (20) als Wellrohr gebildet sind.

11. Vorrichtung nach einem der Ansprüche 1 bis 10, dadurch gekennzeichnet, daß die Unebenheiten (22, 26) von warzenartigen Erhöhungen (23, 27) gebildet sind.

12. Vorrichtung nach Anspruch 11, dadurch gekennzeichnet, daß die warzenartigen Erhöhungen (23, 27) in Strömungsrichtung langgezogen, z.B. in Strömungsrichtung sich tropfenförmig erweiternd ausgebildet sind.

13. Vorrichtung nach einem der Ansprüche 1 bis 12 mit mindestens einem im Krümmer angeordneten Strömungsteiler in Form eines senkrecht stehenden Leitblechs, dadurch gekennzeichnet, daß das Leitblech (21) zumindest im Bereich des Krümmerauslaufs und zumindest an seiner innen liegenden Seite mit Unebenheiten (24) in ggfls. regelmäßiger Anordnung versehen ist.

14. Vorrichtung nach einem der Ansprüche 1 bis 13, dadurch gekennzeichnet, daß das Leitblech (21) mit den Unebenheiten (28) bis in das gerade Endstück (20) hineinragt.

15. Vorrichtung nach einem der Ansprüche 1 bis 14, dadurch gekennzeichnet, daß die Krümmungskurve des Leitblechs (21) im Auslaufbereich des Krümmers (15) eine ausgeprägte Diskoninuität aufwest, die ggfls. der an der außen liegenden Wand (18) des Krümmers entspricht.

16. Vorrichtung nach einem der Ansprüche 1 bis 15, dadurch gekennzeichnet, daß der Krümmer (15) von seinem Ansatz an der Streuleitung (8, 17) zunächst in Fahrtrichtung nach vorne gezogen und dann nach hinten abgebogen ist.

17. Vorrichtung nach einem der Ansprüche 1 bis 16, dadurch gekennzeichnet, daß die Prallplatte (16) mit Unebenheiten (34), z.B. mit warzenartigen Erhöhungen, in ggfls. regelmäßiger Anordnung versehen ist.

**Revendications**

1. Dispositif pour l'épandage pneumatique d'engrais, ou l'analogue, constitué par un réservoir porté ou tracté muni d'orifices de décharge, d'organes de dosage associés à ces derniers et de tubes d'épandage s'y raccordant et s'étendant transversalement au sens de la marche, lesquels comportent des coudes déviant le produit à épandre à distance variable de l'axe du réservoir, des plaques déflectrices, qui renvoient en éventail le jet d'engrais qui les heurte, étant disposées avant l'extrémité de décharge des coudes en étant inclinées par rapport au plan de ceux-ci, caractérisé en ce que chaque coude (15) a un profil rectangulaire fermé et est muni, sur les côtés intérieurs de la paroi (18) située à l'extérieur et guidant l'engrais et de la paroi située à l'intérieur en vis-à-vis de l'autre, d'irrégularités déviant les particules d'engrais de la paroi et les renvoyant, et en ce que la courbure d'au moins la paroi (18) du coude (15) située à l'extérieur comporte dans la zone de décharge de celui-ci une discontinuité marquée (31).

2. Dispositif selon la revendication 1, caractérisé en ce que les irrégularités sont régulièrement réparties.

3. Dispositif selon la revendication 1, caractérisé en ce qu'on dispose au moins sur le côté intérieur de la paroi (18) du coude (15) située à l'extérieur, dans la zone de son extrémité, une surface de guidage (31) inclinée vers la paroi intérieure en vis-à-vis (19) et constituant la discontinuité.

4. Dispositif selon l'une des revendications 1 à 3, caractérisé en ce que le coude (15) comporte une partie terminale rectiligne (20) ayant un profil rectangulaire fermé, qui comporte la plaque déflectrice (16) à son extrémité ouverte.

5. Dispositif selon l'une des revendications 1 à 4, caractérisé en ce que la surface de guidage (31) est disposée sur la paroi (18) du coude (15) située à l'extérieur, dans la zone de la transition avec la partie terminale rectiligne (20) plus étroite que le coude.

6. Dispositif selon l'une des revendications 1 à 5, caractérisé en ce que les irrégularités (22) sont disposées sur le côté intérieur de la paroi (18) située à l'extérieur, avant la surface de guidage (31) et sur celle-ci.

7. Dispositif selon l'une des revendications 1 à 6, caractérisé en ce que la partie terminale rectiligne (20) est munie d'irrégularités (26) sur le côté intérieur de la paroi située à l'extérieur (25) et de la paroi située à l'intérieur (24).

8. Dispositif selon l'une des revendications 1 à 7, caractérisé en ce qu'au moins la partie terminale rectiligne (20) est munie sur le côté intérieur de toutes les parois (24, 25, 29, 30) d'irrégularités (26) disposées éventuellement de façon régulière.

9. Dispositif selon l'une des revendications 1 à 8, caractérisé en ce que les irrégularités (22) disposées sur le coude (15) avant la surface de guidage (31) sont plus grandes que celles (26) disposées sur la partie terminale rectiligne (20).

10. Dispositif selon l'une des revendications 1 à 9, caractérisé en ce que les irrégularités (22, 26) sont formées par la réalisation du coude (18) et/ou de la partie terminale rectiligne (20) sous forme de tube ondulé.

11. Dispositif selon l'une des revendications 1 à 10, caractérisé en ce que les irrégularités (22, 26) sont formées par des reliefs (23, 27) en forme de boutons.

12. Dispositif selon la revendication 11, caractérisé en ce que les reliefs (23, 27) en forme de boutons sont allongés dans le sens de l'écoulement, par exemple qu'ils s'élargissent en forme de gouttes dans le sens de l'écoulement.

13. Dispositif selon l'une des revendications 1 à 12 comportant au moins un diviseur de courant sous la forme d'une tôle de guidage placée verticalement dans le coude, caractérisé en ce que la tôle de guidage (21) est munie d'irrégularités (24), éventuellement disposées régulièrement, au moins dans la zone de la sortie du coude et au moins sur son côté situé à l'intérieur.

14. Dispositif selon l'une des revendications 1 à 13, caractérisé en ce que la tôle de guidage (21) portant les irrégularités (28) s'avance jusque dans la partie terminale rectiligne (20).

15. Dispositif selon l'une des revendications 1 à 14, caractérisé en ce que la courbure de la tôle de guidage (21) comporte dans la zone de sortie du coude (15) une discontinuité marquée qui, éventuellement, correspond à celle placée sur la paroi (18) du coude située à l'extérieur.

16. Dispositif selon l'une des revendications 1 à 15, caractérisé en ce que le coude (15) à partir de son attache sur la canalisation d'épandage (8, 17) est d'abord orienté vers l'avant dans le sens de la marche, puis il est ensuite incurvé vers l'arrière.

17. Dispositif selon l'une des revendications 1 à 16, caractérisé en ce que la plaque de guidage (16) est munie d'irrégularités (34), par exemple de reliefs en forme de boutons, disposés éventuellement de façon régulière.

## Claims

1. Apparatus for the pneumatic spreading of fertilizer or the like, comprising a saddled-on or mobile storage container with outlet openings, dosing members associated therewith and connected thereto spreading pipes extending transversally to the direction of travel and which have at different distances from the container axis spreading material-guiding bends and upstream of the discharge end thereof are provided baffle plates inclined with respect to the bend plane and which reflect the striking fertilizer stream to form spreading fans, characterized in that each bend (15) has a closed rectangular cross-section and is provided on the insides of the fertilizer-guiding, external wall (18) and the facing inner wall with unevennesses deflecting the fertilizer particles from the wall and reflecting the same and that the curvature of at least the outer wall (18) of the bend (15) has a distinct discontinuity (31) in the outlet region thereof.

2. Apparatus according to claim 1, characterized in that the unevennesses are regularly distributed.

3. Apparatus according to claim 1, characterized in that at least on the inside of the outer wall (18) of the bend (15) in the vicinity of its end is provided a discontinuity-forming deflecting surface (31) inclined in the direction of the facing inner wall (19).

4. Apparatus according to one of the claims 1 to 3, characterized in that the bend (15) has a straight end piece (20) with a closed rectangular profile and having at its open end the baffle plate (16).

5. Apparatus according to one of the claims 1 to 4, characterized in that the deflecting surface (31) is positioned on the outer wall (18) of the bend (15) in the vicinity of the transition in to the straight end piece (20) which is narrowed compared with the bend.

6. Apparatus according to one of the claims 1 to 5, characterized in that the unevennesses (22) are located on the inside the outer wall (18) upstream of and on the deflecting surface (31).

7. Apparatus according to one of the claims 1 to 6, characterized in that the straight end portion (20) is provided with unevennesses (26) on the inside of the outer and inner walls (24, 25).

8. Apparatus according to one of the claims 1 to 7, characterized in that at least the straight end piece (20) is provided on the inside of all the walls (24, 25, 29, 30) with unevennesses (26) optionally arranged in a regular manner.

9. Apparatus according to one of the claims 1 to 8, characterized in that the unevennesses (22) located on the bend (15) upstream of the deflecting surface (31) are larger than those (26) on the straight end piece (20).

10. Apparatus according to one of the claims 1 to 9, characterized in that the unevennesses (22, 26) are formed through the construction of the bend (18) and/or the straight end piece (20) and a corrugated pipe.

11. Apparatus according to one of the claims 1 to 10, characterized in that the unevennesses (22, 26) are formed by stud-like elevations (23, 27).

12. Apparatus according to claim 11, characterized in that the stud-like elevations (23, 27) are drawn out in the flow direction and e.g. widen in tear-shaped manner therein.

13. Apparatus according to one of the claims 1 to 12, with at least one flow divider in the form of an upright deflector positioned in the bend, characterized in that the deflector (21) at least in the vicinity of the bend outlet and at least on its inner side is provided with unevennesses (24) optionally arranged in a regular manner.

14. Apparatus according to one of the claims 1 to 13, characterized in that the deflector (21) with the unevennesses (28) project into the straight end piece (20).

15. Apparatus according to one of the claims 1 to 14, characterized in that the curvature of the deflector (21) in the outlet region of the bend (15) has a distinct discontinuity, which optionally corresponds to that on the outer wall (18) of the bend.

16. Apparatus according to one of the claims 1 to 15, characterized in that from its start on the spreading line (8, 17), the bend (15) is initially drawn forwards in the direction of travel and is then bent rearwards.

17. Apparatus according to one of the claims 1 to 16, characterized in that the baffle plates (16) is provided with unevennesses (34), e.g. with stud-like elevations, optionally in a regular arrangement.

Fig. 1

Fig. 2

Fahrtrichtung

Fig. 3

Fig. 4

2

28  29  28

27          27

26          26

15  20  21  30

Fig. 5

15

22

18

31

20

24

26

6

Fig. 6

16

32    15    18

17

19

33
26    25
20

Fig. 7

34    16    20    17    8

16'
34

Fig. 8

4